# FASCICULE DE BREVET EUROPEEN

(11) **EP 2 953 443 B1**
(45) Date de publication et mention de la délivrance du brevet: **14.07.2021**
(21) Numéro de dépôt: 14705822.6
(22) Date de dépôt: 16.01.2014
(51) Int. Cl.: A01C 7/04, A01C 7/20

(54) **SEMOIR MONOGRAINE AVEC AU MOINS UN ÉLÉMENT SEMEUR PERFECTIONNÉ**
EINZELKORNSÄMASCHINE MIT WENIGSTENS EINER VERBESSERTEN SÄELEMENT
SINGLE-GRAIN SEEDER WITH AT LEAST ONE IMPROVED SEEDING ELEMENT

(30) Priorité: 07.02.2013 FR 1351055
(43) Date de publication de la demande: 16.12.2015
(73) Titulaire: Kuhn SAS, 67700 Saverne (FR)
(72) Inventeur: AUDIGIE, Jean-Charles, 67330 Bouxwiller (FR); EBERHART, Julien, 57370 Veckersviller (FR)
(74) Mandataire: Cabinet Nuss
(86) Numéro de dépôt international: PCT/FR2014/050088
(87) Numéro de publication internationale: WO 2014/122377

(56) Documents cités:
- EP-A2- 2 514 291
- FR-A1- 2 247 150
- GB-A- 2 000 422
- US-A- 2 535 222
- US-A- 4 047 638
- US-B1- 6 651 570

## Description

La présente invention se rapporte au domaine technique général du machinisme agricole. L'invention concerne un semoir monograine présentant un châssis qui supporte au moins un élément semeur comportant un boîtier de distribution, au moins un disque d'ouverture permettant d'ouvrir un sillon dans le sol et une roue de contrôle de profondeur, ledit boîtier de distribution délivrant les graines une à une, via un élément rotatif de dosage destiné à tourner autour d'un axe de rotation, chaque graine est éjectée de l'élément rotatif de dosage au niveau d'un point d'éjection s'étendant dans la partie inférieure de l'élément rotatif de dosage.

Sur certains semoirs connus de ce genre, le boîtier de distribution est positionné à l'arrière d'un soc dont la fonction est le placement des graines dans le sillon. Ce soc s'étend entre et à l'arrière d'un double disque ouvrant le sillon, il tient le sillon ouvert jusqu'à ce que la graine y soit déposée. Le contrôle de la profondeur de semis se fait au moyen d'une roue de contrôle de profondeur. La roue de contrôle de profondeur est décalée en avant ou en arrière par rapport au soc. Un tel élément semeur s'appuie sur le sol par l'intermédiaire de deux points de contact. Le premier contact au sol est réalisé par la roue de contrôle de profondeur et le second via le soc. Chaque obstacle et/ou irrégularité du sol entraîne donc toujours deux perturbations pour l'élément semeur puisque l'appui au sol se fait au niveau de la roue de contrôle de profondeur et au niveau du soc. La précision du semis est altérée par ces perturbations. Par ailleurs, la précision du semis est également détériorée du fait de l'usure du soc.

Sur d'autres semoirs, le boîtier de distribution est monté au-dessus du double disque d'ouverture et un organe de transfert permet d'amener les graines dans le sillon en formation. Lors du semis, seules les roues de contrôle de profondeur sont en contact avec le sol. Avec un seul point de contact au sol, la qualité de semis de chaque élément semeur est optimale. Une telle configuration a par contre un lâcher de graines à environ 50 cm au-dessus du sol, ainsi les graines sont guidées par l'organe de transfert. Cette hauteur de lâcher importante détériore la précision de semis. De manière générale, le type et le poids des graines modifient la vitesse de chute des graines du fait de l'influence de la pesanteur.

La présente invention a pour but général de remédier aux inconvénients précités. Elle doit notamment proposer un semoir monograine avec une qualité de semis maximum. La précision de semis ne doit pas être altérée par l'agencement des éléments constitutifs de l'élément semeur.

Par le document US 2 535 222, on connait un semoir monograine présentant les caractéristiques du préambule de la revendication 1.

Dans ce document US et comme indiqué dans le préambule de la revendiaction 1, ledit point d'éjection est, en vue suivant l'axe de rotation de l'élément rotatif de dosage, disposé dans le diamètre extérieur dudit disque d'ouverture. Grâce à cette caractéristique, le point d'éjection ou point de lâcher des graines se situe relativement proche du sol et les graines tombent directement dans le sillon en gardant la précision de l'élément rotatif de dosage. L'accélération de la vitesse de la graine due à l'influence de la pesanteur est plutôt limitée.

Toutefois, le semoir de ce document US ne peut pas s'adapter, notamment son éjéction aux conditions de travail ou encore au type de graines à semer, et ne peut donc garantir une qualité de semis maximum en toutes cironstances.

Cette limitaion de l'état de la technique st surmontée par l'invention grâce aux caractéristiques de la partie caractérisante de la revendication 1.

Selon une autre importante caractéristique, le point d'éjection est, en vue suivant l'axe de rotation de l'élément rotatif de dosage, disposé dans la moitié la plus en arrière du disque d'ouverture. Un tel agencement de l'élément rotatif de dosage et du disque d'ouverture contribue à réaliser un élément semeur relativement compact.

D'autres caractéristiques et avantages de l'invention se dégageront de la description qui va suivre en regard des dessins annexés qui ne sont donnés qu'à titre d'exemples non limitatifs de l'invention. Sur ces dessins :
la figure 1 illustre selon une vue de côté un semoir monograine selon l'invention,
la figure 2 représente schématiquement un élément semeur en vue de côté,
la figure 3 est une vue de dessous de l'élément semeur de la figure 2,
la figure 4 représente une vue de côté d'un élément semeur selon un autre exemple de réalisation.

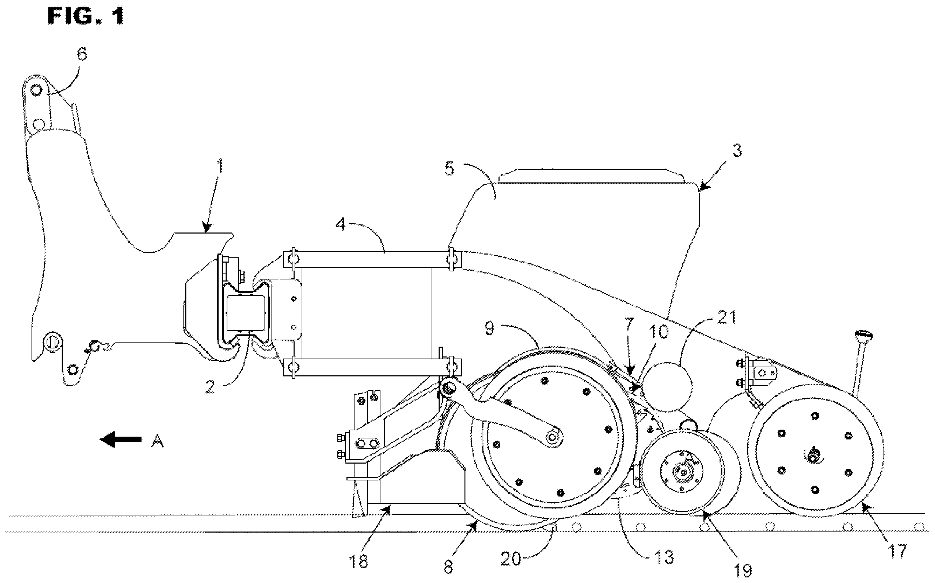

La machine agricole représentée sur la figure 1 est un semoir (1). Il s'agit d'un semoir (1) de précision ou monograine à distribution pneumatique ou mécanique. Un tel semoir (1) distribue les graines une à une sur la ligne de semis à des écartements constants. Ce semoir (1) comporte un châssis (2) qui supporte au moins un élément semeur (3) et qui repose sur le sol, au travail, via des roues porteuses. Les éléments semeurs (3) sont répartis de manière régulière sur le châssis (2). Le nombre d'éléments semeurs (3) correspond au nombre de rangs de semis. Chaque élément semeur (3) est monté sur le châssis (2) au moyen d'un parallélogramme (4) déformable qui lui permet de se déplacer parallèlement au sol. Le semoir (1) comporte également au moins un réservoir (5) pour stocker les graines ou le produit à semer. Dans un exemple de réalisation non représenté, le châssis (2) porte un réservoir central et chaque élément semeur (3) possède un réservoir auxiliaire alimenté à distance. Dans ce cas, la capacité des réservoirs auxiliaires est réduite.

La figure 1 est une vue latérale du semoir (1) selon l'invention dans une configuration de travail. Le châssis (2) comporte aussi un cadre d'attelage (6) permettant d'établir une liaison au dispositif d'attelage d'un tracteur (non représenté). Cet attelage trois points permet de transférer le poids et l'effort du semoir (1) sur les roues arrière du tracteur. Le tracteur déplace le semoir (1) suivant une direction d'avance indiquée par la flèche (A). Dans la suite de la description, les notions suivantes "avant", "arrière" et "devant", "derrière" sont définies par rapport au sens d'avance (A). L'élément semeur (3) est représenté de façon schématique sur les figures. Il comporte notamment un boîtier de distribution (7), un disque d'ouverture (8) et une roue de contrôle de profondeur (9).

Le boîtier de distribution (7) permet l'extraction de graines au moyen d'un élément rotatif de dosage (10). L'élément rotatif de dosage (10) est destiné à tourner autour d'un axe de rotation (11). Chaque graine est éjectée de l'élément rotatif de dosage (10) au niveau d'un point d'éjection (12) qui s'étend dans la partie inférieure de l'élément rotatif de dosage (10). Le point d'éjection (12) est défini comme étant le point où la graine est lâchée, c'est-à-dire le point où la graine quitte l'élément rotatif de dosage (10). Le boîtier de distribution (7) comporte un carter de forme générale cylindrique et un couvercle. L'élément rotatif de dosage (10) est monté dans le carter et est entraîné en rotation via des éléments d'entraînement en fonction de la vitesse d'avance du semoir (1). Ainsi, la vitesse de distribution est adaptée à la vitesse d'avancement et les graines sont semées à des écartements constants.

Dans l'exemple représenté, le boîtier de distribution (7) est une distribution à dépression monograine. Cette distribution extrait une à une les graines d'un réservoir (5) pour les répartir à intervalle constant sur le rang de semis. Le boîtier de distribution (7) comprend ainsi une chambre d'alimentation en graines, une chambre d'aspiration et un disque perforé (13) séparant les deux chambres. Le disque perforé (13) est à considérer comme l'élément rotatif de dosage (10). Le disque perforé (13) est plan et tourne autour de l'axe de rotation (11) sensiblement horizontal. Il présente des perforations disposées à intervalles réguliers sur une circonférence voisine de son pourtour. Les perforations peuvent être des trous cylindriques, non cylindriques ou de forme ouverte jusqu'à la périphérie du disque. Les graines sont prélevées dans le fond du boîtier de distribution (7) et sont lâchées au niveau du point d'éjection (12) pour tomber dans le sillon. Le point d'éjection peut être localisé sur la circonférence du disque perforé (13), dans la partie basse du disque perforé (13). Les graines sont retenues pendant au moins une partie de leur déplacement angulaire par aspiration au travers de la perforation. Une ou plusieurs graine(s) est(sont) aspirée(s) par la dépression qui plaque les graines sur les perforations. Pendant la rotation, les graines passent devant un sélecteur (14) qui n'en laisse qu'une seule par perforation. Une telle distribution à disque vertical répartie les graines à intervalle constant sur le rang de semis puisque les graines sortent avec un espacement régulier de l'élément rotatif de dosage (10) et donc du boîtier de distribution (7). Les graines sont représentées schématiquement sur les figures, elles sont posées au fond du sillon réalisé par le disque d'ouverture (8). Un éjecteur peut faciliter le décrochement des graines pour libérer la graine qui tombe dans le sillon au niveau du point d'éjection (12). Le flux d'air en dépression pour la sélection des graines est produit par une turbine. De manière alternative, la sélection des graines est assistée par un flux d'air en pression.

Le disque d'ouverture (8) crée un sillon à une profondeur déterminée pour y placer la graine et la recouvrir de terre. Grâce à un angle d'attaque, le disque d'ouverture (8) découpe le sol en soulevant le sol d'un côté. Le disque d'ouverture (8) est donc orienté par rapport à la verticale. Le disque d'ouverture (8) tourne autour d'un axe de rotation (15) sensiblement horizontal. L'axe de rotation (15) est avantageusement incliné par rapport à l'horizontale pour pouvoir déposer les graines au fond du sillon. Ainsi, le même disque d'ouverture (8) réalise l'ouverture et la dépose des graines dans le sillon. Pour tenir le sillon ouvert et/ou pour aider à la formation du sillon, le disque d'ouverture (8) est associé à un outil complémentaire (22). L'outil complémentaire (22) est par exemple réalisé sous la forme d'un coutre ou d'un disque.

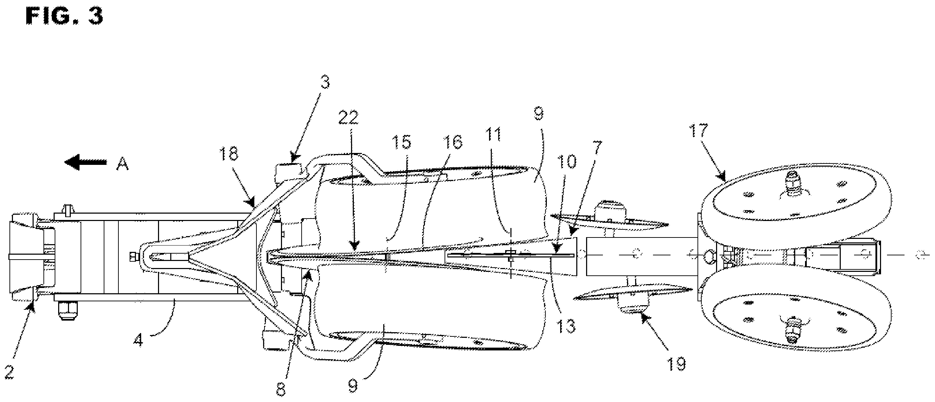

Dans l'exemple représenté sur les figures 1 à 3, le disque d'ouverture (8) est associé à un outil complémentaire (22) sous la forme d'un disque (16). Le disque d'ouverture (8) et le disque (16) sont disposés en V de telle sorte que les périphéries des deux disques (8 et 16) se rejoignent dans la zone située à l'avant. Dans cet exemple de réalisation, l'élément semeur (3) comporte donc un double disque d'ouverture. Un tel agencement est avantageux pour creuser et former le sillon. Chaque disque (8, 16) s'étend dans un plan oblique, orienté angulairement par rapport à un plan fictif vertical contenant la direction d'avance (A). On remarque que ces disques (8, 16) présentent un diamètre extérieur sensiblement identique et peuvent être de forme plane ou de forme concave. Selon la figure 3, on remarque que les disques (8 et 16) sont placés de manière à ce que l'ouverture du sillon est symétrique puisque chacun des disques (8 et 16) ouvre un côté du sillon. Dans certains cas, le diamètre du disque (16) pourra être inférieur à celui du disque d'ouverture (8).

La profondeur du sillon creusée par le disque d'ouverture(8) est contrôlée grâce à la roue de contrôle de profondeur (9). La roue de contrôle de profondeur (9) est placée latéralement sur le disque d'ouverture (8). De préférence, la position latérale de la roue de contrôle de profondeur (9) est telle que son point de contact avec le sol est aligné, en vue de côté, avec l'endroit où la graine va tomber. La roue de contrôle de profondeur (9) est placée au niveau du point de chute de la graine dans le sillon. Ainsi, le disque d'ouverture (8) peut suivre, sans décalage, toutes les dénivellations du sol et garantir une profondeur de semis régulière. Une roue de contrôle de profondeur (9) est également associée au disque (16). Selon une alternative non représentée, le disque d'ouverture (8) et le disque (16) sont décalés l'un par rapport à l'autre dans la direction d'avance (A) pour faciliter la formation du sillon dans des sols sans préparation du sol préalable ou avec une préparation simplifiée. Dans ce cas pour le placement de l'élément rotatif de dosage (10), il faut considérer le disque qui termine le sillon, le plus en arrière.

A la lumière de la figure 1, l'élément semeur (3) est équipé d'un élément de rappuyage (17) disposé à l'arrière du disque d'ouverture (8). Cet élément de rappuyage (17) sert au rappuyage et à la fermeture du sillon. Il ramène de la terre sur la ligne de semis pour favoriser le contact entre la graine et le sol et pour favoriser la germination de la graine. Cet élément de rappuyage (17) est une roue double disposée en V pour rappuyer la terre autour de la graine. De manière alternative, la roue double peut être remplacée par une roue simple plus ou moins large. On remarque que l'élément semeur (3) représenté porte également un équipement avant (18) et un équipement intermédiaire (19). L'équipement avant (18) est par exemple un dispositif de nettoyage pour écarter les mottes et/ou les débris de la ligne de semis. L'équipement intermédiaire (19) est, pour sa part, disposé entre le disque d'ouverture (8) et l'élément de rappuyage (17). Il est constitué de disques aidant à la fermeture du sillon ou d'une roulette qui sert au rappuyage de la graine dans le sillon avant la fermeture du sillon.

Selon une importante caractéristique de l'invention, le point d'éjection (12) est, en vue suivant l'axe de rotation (11) de l'élément rotatif de dosage (10), disposé dans le diamètre extérieur du disque d'ouverture (8). Grâce à cette caractéristique, le point d'éjection (12) des graines est relativement proche du fond du sillon. Les graines tombent directement dans le sillon en gardant la précision donnée par l'élément rotatif de dosage (10). La qualité du semis n'est donc pas altérée par un organe de transfert ni par l'accélération de la pesanteur. On remarque que le diamètre de l'élément rotatif de dosage (10) est inférieur au diamètre extérieur du disque d'ouverture (8) et que l'axe de rotation (11) de l'élément rotatif de dosage (10) s'étend derrière l'axe de rotation (15) du disque d'ouverture (8). L'axe de rotation (11) de l'élément rotatif de dosage (10) s'étend sensiblement au même niveau par rapport au sol que l'axe de rotation (15) du disque d'ouverture (8). Dans la réalisation représentée, l'axe de rotation (11) s'étend quelque peu au-dessus de l'axe de rotation (15).

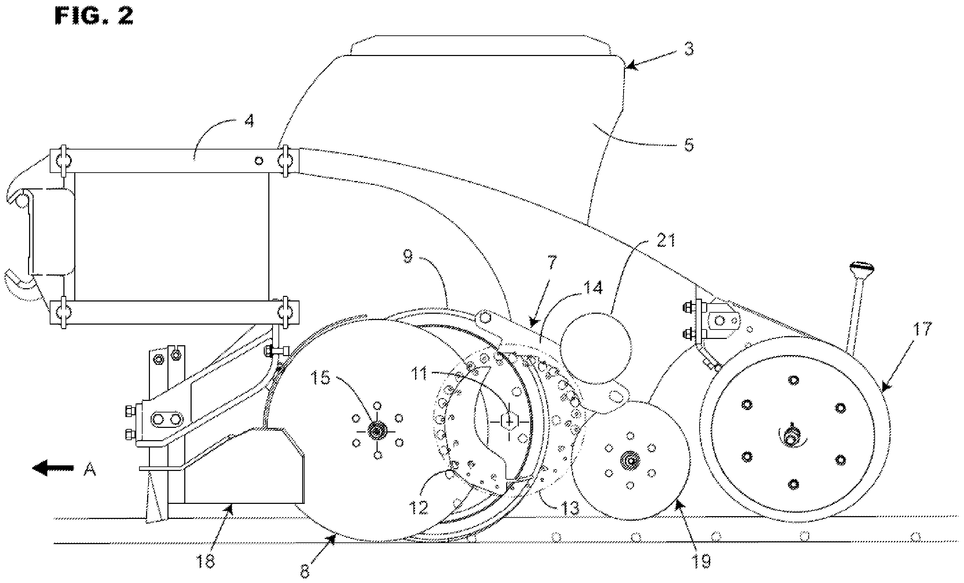

Selon une autre caractéristique, le point d'éjection (12) est, en vue suivant l'axe de rotation (11) de l'élément rotatif de dosage (10), disposé dans la moitié la plus en arrière du disque d'ouverture (8). Un tel agencement de l'élément rotatif de dosage (10) et du disque d'ouverture (8) contribue à obtenir un élément semeur (3) relativement compact. D'une manière avantageuse et tel que représenté à la figure 2, le point d'éjection (12) est prévu dans le quart inférieur et avant du boîtier de distribution (7) ou de l'élément rotatif de dosage (10). Le point d'éjection (12) s'étend sensiblement en dessous et à l'arrière de l'axe de rotation (15) du disque d'ouverture (8). De cette manière le lâcher de graines se fait à une hauteur relativement faible du sol et la graine tombe en terre dès l'amorce du sillon par le disque d'ouverture (8). Une goulotte de transfert des graines n'est donc pas nécessaire. Cette hauteur est comprise entre 3 et 20 cm. Le disque d'ouverture (8) comporte un bouclier (20) dont la fonction est de protéger la distribution et la trajectoire de la graine. Le bouclier (20) aide également à la formation du fond du sillon. La distance entre le fond du sillon et le point d'éjection (12) est inférieure au rayon du disque d'ouverture (8). Cette distribution peut donc s'affranchir d'un organe de transfert et d'un soc qui maintient le sillon ouvert.

En accord avec l'invention, le montage du boîtier de distribution (7) sur l'élément semeur (3) est réglable en hauteur. Ce réglage permet d'adapter la position du boîtier de distribution (7) par rapport au disque d'ouverture (8). Le réglage permet notamment de placer l'élément rotatif de dosage (10) et plus précisément de placer le point d'éjection (12) en fonction des conditions de travail. De préférence, le point d'éjection (12) est placé pour être le plus bas possible, c'est-à-dire le plus proche possible du fond du sillon. Ce réglage se fait en fonction du type de graines à semer, de la profondeur de semis et du type de sol et de la présence de cailloux ou de débris végétaux. La position en hauteur de l'axe de rotation (11) de l'élément rotatif de dosage (10) est réglable par rapport à l'axe de rotation (15) du disque d'ouverture (8). Selon l'invention, la distance de réglage entre le fond du sillon et le point d'éjection (12) est comprise entre 3 et 20 cm.

La graine éjectée du boîtier de distribution (7) est déposée dans le sillon dès la formation du fond de sillon créé par le disque d'ouverture (8). La graine est déposée sensiblement au voisinage du point d'appui au sol de la roue de contrôle de profondeur (9). La profondeur de semis est donc régulière puisque le décalage, dans la direction d'avance (A) est minimum entre le lâcher de graines et la roue de contrôle de profondeur (9). A la lumière de la figure 3, on remarque que la partie avant du boîtier de distribution (7) est conformée pour se placer entre le disque d'ouverture (8) et l'outil complémentaire (22) réalisé par le disque (16). La partie avant est affinée pour se loger entre les disques disposés en V. Les graines sont ainsi déposées dès la formation du sillon. La formation du sillon a lieu sensiblement à la verticale de l'axe de rotation (15) du disque d'ouverture (8). Le point d'éjection (12) est donc placé, vue dans la direction d'avance (A), de manière à être le plus près possible de l'axe de rotation (15). L'encombrement en hauteur et en longueur du disque d'ouverture (8) et du boîtier de distribution (7) sont ainsi réduits. Afin de permettre l'échange du disque perforé (13) et la vidange des graines, le boîtier de distribution (7) est démontable facilement et rapidement.

Selon un autre avantage, l'entraînement (21) de l'élément rotatif de dosage (10) est déporté par rapport à son axe de rotation (11). L'entraînement (21) est positionné directement au-dessus de l'élément rotatif de dosage (10). Dans l'exemple représenté, l'entraînement de l'élément rotatif de dosage (10) ou du disque perforé (13) se fait sur sa périphérie. L'entraînement (21) est réalisé par un moteur électrique, par des pignons commandant le boîtier de distribution via une chaîne ou par des renvois d'angle commandant le boîtier de distribution via un arbre à cardan.

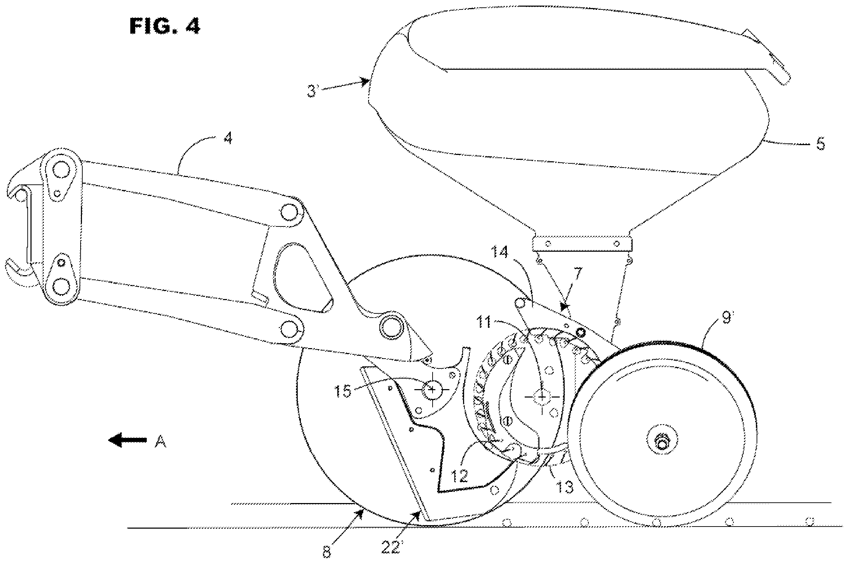

La figure 4 représente un élément semeur (3') selon un autre exemple de réalisation. Cet élément semeur (3') est identique à l'élément semeur (3) des figures 1 à 3 à l'exception de l'outil complémentaire (22') associé au disque d'ouverture (8) et de la position de la roue de contrôle de profondeur (9'). L'outil complémentaire (22') est constitué d'un coutre. Ce coutre est monté fixe tel que représenté ou alors monté rotatif. L'élément semeur (3') est équipé d'un seul disque d'ouverture (8). L'angle d'attaque du disque d'ouverture (8) est donc plus important. L'angle d'attaque est tel que l'ouverture du sillon est assez large. Le coutre participe au maintien du sillon ouvert pour déposer les graines. La position du coutre est telle qu'il ne participe pas à l'ouverture du sillon. La roue de contrôle de profondeur (9') s'étend avantageusement à l'arrière du disque d'ouverture (8). Elle permet d'une part de contrôler la profondeur de semis et d'autre part de rappuyer et de fermer le sillon. Cet élément semeur (3') ne comporte pas d'élément de rappuyage (17).

Selon un exemple de réalisation non représenté, le roue de contrôle de profondeur s'étend à l'avant du disque d'ouverture (8).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Semoir monograine (1) présentant un châssis (2) qui supporte au moins un élément semeur (3, 3') comportant un boîtier de distribution (7) et au moins un disque d'ouverture (8) permettant d'ouvrir un sillon dans le sol, ledit boîtier de distribution (7) délivrant les graines une à une via un élément rotatif de dosage (10) destiné à tourner autour d'un axe de rotation (11), et chaque graine étant éjectée de l'élément rotatif de dosage (10) au niveau d'un point d'éjection (12) s'étendant dans la partie inférieure dudit élément rotatif de dosage (10),
semoir monograine (1) dans lequel ledit point d'éjection (12) est, en vue suivant l'axe de rotation (11) de l'élément rotatif de dosage (10), disposé dans le diamètre extérieur dudit disque d'ouverture (8), et,
dans lequel ledit au moins un ou chaque élément semeur (3, 3') comporte également une roue de contrôle de profondeur (9, 9') qui est placée latéralement sur le disque d'ouverture (8),
semoir monograine (1) **caractérisé**
**en ce que** le montage dudit boîtier de distribution (7) sur l'élément semeur (3, 3') est réglable en hauteur, et
**en ce que** la distance de réglage entre le fond du sillon et le point d'éjection (12) est comprise entre 3 et 20 cm.

2. Semoir selon la revendication 1, **caractérisé en ce que** le point d'éjection (12) est, en vue suivant l'axe de rotation (11) de l'élément rotatif de dosage (10), disposé dans la moitié la plus en arrière du disque d'ouverture (8).

3. Semoir selon la revendication 1 ou 2, **caractérisé en ce que** le point d'éjection (12) est prévu dans le quart inférieur et avant du boîtier de distribution (7) et s'étend sensiblement en dessous et à l'arrière de l'axe de rotation (15) du disque d'ouverture (8).

4. Semoir selon l'une quelconque des revendications 1 à 3, **caractérisé en ce que** le point d'éjection (12) est placé de manière à être le plus proche possible du fond du sillon, le sillon est creusé par le disque d'ouverture (8) et sa profondeur est contrôlée grâce à la roue de contrôle de profondeur (9, 9').

5. Semoir selon l'une quelconque des revendication 1 à 4, **caractérisé en ce que** la graine éjectée de l'élément rotatif de dosage (10) est déposée dans le sillon au voisinage du point d'appui au sol de ladite roue de contrôle de profondeur (9).

6. Semoir selon l'une quelconque des revendications 1 à 5, **caractérisé en ce que** le diamètre de l'élément rotatif de dosage (10) est inférieur au diamètre extérieur du disque d'ouverture (8).

7. Semoir selon l'une quelconque des revendications 1 à 6, **caractérisé en ce que** le disque d'ouverture (8) présente un angle d'attaque pour ouvrir un sillon et que la formation du sillon est complété par un outil complémentaire (22, 22').

8. Semoir selon la revendication 7, **caractérisé en ce que** la partie avant du boîtier de distribution (7) est conformée pour se placer entre le disque d'ouverture (8) et l'outil complémentaire (22, 22').

9. Semoir selon l'une quelconque des revendications 1 à 8, **caractérisé en ce que** l'élément semeur (3, 3') est dépourvu d'une goulotte de transfert pour les graines.

10. Semoir selon l'une quelconque des revendications 1 à 9, **caractérisé en ce que** l'entraînement (21) de l'élément rotatif de dosage (10) est déporté par rapport à son axe de rotation (11).

11. Semoir selon l'une quelconque des revendications 1 à 10, **caractérisé en ce que** l'élément semeur (3) comporte un double disque d'ouverture (8).

## Patentansprüche

1. Einzelkornsämaschine (1), die einen Rahmen (2) aufweist, welcher wenigstens ein Säelement (3, 3') trägt, das ein Sägehäuse (7) und wenigstens eine Öffnungsscheibe (8), die es ermöglicht, eine Furche im Boden zu öffnen, umfasst, wobei das Sägehäuse (7) die Körner einzeln nacheinander über ein rotierendes Dosierelement (10) liefert, das dazu bestimmt ist, um eine Drehachse (11) zu rotieren, und wobei jedes Korn aus dem rotierenden Dosierelement (10) an einem Auswurfpunkt (12) ausgeworfen wird, der sich im unteren Teil des rotierenden Dosierelements (10) erstreckt,
wobei bei der Einzelkornsämaschine (1) der Auswurfpunkt (12), in Richtung der Drehachse (11) des rotierenden Dosierelements (10) gesehen, im Außendurchmesser der Öffnungsscheibe (8) angeordnet ist, und
wobei das wenigstens eine oder jedes Säelement (3, 3') außerdem ein Tiefenkontrollrad (9, 9') umfasst, welches seitlich an der Öffnungsscheibe (8) angeordnet ist,
wobei die Einzelkornsämaschine (1) **dadurch gekennzeichnet ist,**
**dass** die Anbringung des Sägehäuses (7) am Säelement (3, 3') höhenverstellbar ist, und
dadurch, dass der Einstellabstand zwischen dem Boden der Furche und dem Auswurfpunkt (12) zwischen 3 und 20 cm beträgt.

2. Sämaschine nach Anspruch 1, **dadurch gekennzeichnet, dass** der Auswurfpunkt (12), in Richtung der Drehachse (11) des rotierenden Dosierelements (10) gesehen, in der weiter hinten befindlichen Hälfte der Öffnungsscheibe (8) angeordnet ist.

3. Sämaschine nach Anspruch 1 oder 2, **dadurch gekennzeichnet, dass** der Auswurfpunkt (12) im unteren und vorderen Viertel des Sägehäuses (7) vorgesehen ist und sich im Wesentlichen unterhalb und hinter der Drehachse (15) der Öffnungsscheibe (8) erstreckt.

4. Sämaschine nach einem der Ansprüche 1 bis 3, **dadurch gekennzeichnet, dass** der Auswurfpunkt (12) so angeordnet ist, dass er sich so nahe wie möglich am Boden der Furche befindet, die Furche von der Öffnungsscheibe (8) gezogen wird und ihre Tiefe mittels des Tiefenkontrollrades (9, 9') kontrolliert wird.

5. Sämaschine nach einem der Ansprüche 1 bis 4, **dadurch gekennzeichnet, dass** das Korn, das von dem rotierenden Dosierelement (10) ausgeworfen wird, in der Nähe des Abstützungspunktes des Tiefenkontrollrades (9) am Boden in der Furche abgelegt wird.

6. Sämaschine nach einem der Ansprüche 1 bis 5, **dadurch gekennzeichnet, dass** der Durchmesser des rotierenden Dosierelements (10) kleiner als der Außendurchmesser der Öffnungsscheibe (8) ist.

7. Sämaschine nach einem der Ansprüche 1 bis 6, **dadurch gekennzeichnet, dass** die Öffnungsscheibe (8) einen Anstellwinkel zum Öffnen einer Furche aufweist, und dass die Bildung Furche durch ein komplementäres Werkzeug (22, 22') angeschlossen wird.

8. Sämaschine nach Anspruch 7, **dadurch gekennzeichnet, dass** der vordere Teil des Sägehäuses (7) dafür ausgebildet ist, zwischen der Öffnungsscheibe (8) und dem komplementären Werkzeug (22, 22') angeordnet zu werden.

9. Sämaschine nach einem der Ansprüche 1 bis 8, **dadurch gekennzeichnet, dass** das Säelement (3, 3') nicht mit einer Übergaberutsche für die Körner versehen ist.

10. Sämaschine nach einem der Ansprüche 1 bis 9, **dadurch gekennzeichnet, dass** der Antrieb (21) des rotierenden Dosierelements (10) in Bezug auf dessen Drehachse (11) versetzt ist.

11. Sämaschine nach einem der Ansprüche 1 bis 10, **dadurch gekennzeichnet, dass** das Säelement (3) eine Doppel-Öffnungsscheibe (8) umfasst.

## Claims

1. Single-seed drill (1) having a chassis (2) which supports at least one sowing unit (3, 3') comprising a distribution housing (7) and at least one furrow-opening disc (8) making it possible to open a furrow in the soil, said distribution housing (7) delivering the seeds one by one via a rotary dosing unit (10) designed to rotate about an axis of rotation (11), and each seed being ejected from the rotary dosing unit (10) at the level of an ejection point (12) extending into the lower part of said rotary dosing unit (10),
single-seed drill (1) in which said ejection point (12) is, in a view along the axis of rotation (11) of the rotary dosing unit (10), disposed within the outside diameter of said furrow-opening disc (8), and
in which said at least one or each sowing unit (3, 3') also comprises a depth control wheel (9, 9') which is placed laterally on the furrow-opening disc (8),
single-seed drill (1) **characterised**
**in that** the mounting of said distribution housing (7) on the sowing unit (3, 3') is adjustable in height, and
**in that** the distance of adjustment between the bottom of the furrow and the ejection point (12) is between 3 and 20 cm.

2. Seed drill according to claim 1, **characterised in that** the ejection point (12) is, in a view along the axis of rotation (11) of the rotary dosing unit (10), disposed in the half of the furrow-opening disc (8) that is furthest to the rear.

3. Seed drill according to claim 1 or 2, **characterised in that** the ejection point (12) is provided in the lower front quarter of the distribution housing (7) and extends substantially below and to the rear of the axis of rotation (15) of the furrow-opening disc (8).

4. Seed drill according to any one of claims 1 to 3, **characterised in that** the ejection point (12) is placed so as to be as close as possible to the bottom of the furrow, the furrow is hollowed out by the furrow-opening disc (8) and its depth is controlled owing to the depth control wheel (9, 9').

5. Seed drill according to any one of claims 1 to 4, **characterised in that** the seed ejected from the rotary dosing unit (10) is deposited in the furrow in the vicinity of the point of ground support of said depth control wheel (9).

6. Seed drill according to any one of claims 1 to 5, **characterised in that** the diameter of the rotary dosing unit (10) is smaller than the outside diameter of the furrow-opening disc (8).

7. Seed drill according to any one of claims 1 to 6, **characterised in that** the furrow-opening disc (8) has an angle of attack for opening a furrow and **in that** the formation of the furrow is completed by a complementary tool (22, 22').

8. Seed drill according to claim 7, **characterised in that** the front part of the distribution housing (7) is shaped so as to be placed between the furrow-opening disc (8) and the complementary tool (22, 22').

9. Seed drill according to any one of claims 1 to 8, **characterised in that** the sowing unit (3, 3') has no transfer chute for the seeds.

10. Seed drill according to any one of claims 1 to 9, **characterised in that** the drive (21) of the rotary dosing unit (10) is offset relative to its axis of rotation (11).

11. Seed drill according to any one of claims 1 to 10, **characterised in that** the sowing unit (3) comprises a double furrow-opening disc (8).
